# FASCICULE DE BREVET EUROPEEN

(11) **EP 1 870 750 B1**
(45) Date de publication et mention de la délivrance du brevet: **16.06.2010**
(21) Numéro de dépôt: 07301127.2
(22) Date de dépôt: 19.06.2007
(51) Int. Cl.: G02B 6/44

(54) **Cassette pour cables optiques, rail de support et ensemble d'empilage de telles cassettes**
Kassette für Glasfaserkabel, Stützschiene und Stapelsystem für solche Kassetten
Cassette for optical cables, support rail and assembly for stacking such cassettes

(30) Priorité: 22.06.2006 FR 0652609
(43) Date de publication de la demande: 26.12.2007
(73) Titulaire: Nexans, 75008 Paris (FR)
(72) Inventeur: Milanowski, Michel, 60540 Anserville (FR); Sonza Reorda, Pietro, 01220 Divonne Les Bains (FR)
(74) Mandataire: Feray, Valérie

(56) Documents cités:
- EP-A- 1 593 994
- EP-A1- 0 557 187
- EP-A1- 0 557 190
- EP-A1- 1 832 907
- WO-A-89/05989
- WO-A2-94/12904
- DE-U1- 29 921 304
- FR-A1- 2 793 564
- GB-A- 2 316 496
- US-A- 5 553 186

## Description

L'invention concerne une cassette pour câbles optiques, un rail de support destiné à former un ensemble d'empilage de cassettes par association avec au moins deux cassettes et un ensemble d'empilage de telles cassettes.

Une telle cassette est une boîte de lovage et de protection de fibres optiques et souvent également de protection de raccords entre les fibres optiques lovées. De telles cassettes sont utilisées pour le raccordement d'un câble optique ou de différents câbles optiques à des jarretières optiques. Chaque cassette est affectée à deux fibres optiques à raccorder l'une à l'autre ou à plusieurs fibres à raccorder individuellement à plusieurs autres fibres.

Plusieurs cassettes sont en général affectées au traitement de la totalité des fibres d'un ou de plusieurs câbles optiques à raccorder à un ou d'autres câbles optiques ou des jarretières dans un boîtier de raccordement.

Le modèle d'utilité AT 004 099 U1 décrit un tel ensemble de cassettes.

Cet ensemble comprend un rail de maintien comportant deux brides perforées dont chaque paire de perforations en vis-à-vis peut recevoir une pièce d'articulation d'une cassette. Ce rail peut être fixé dans un boîtier de sorte à être incliné de 45° par rapport à une paroi de ce boîtier. Les cassettes superposées et articulées sur le rail sont alors décalées les unes des autres, dans une position d'empilage dite à 45° correspondant à l'inclinaison de l'axe passant par le centre de chacune d'elles. L'articulation sur le rail est réalisée par emmanchement axial de deux tenons de même direction dans chaque paire de perforations du rail et blocage par une languette de clippage.

Les mêmes cassettes peuvent également être empilées dans une position dite à 90° correspondant à l'inclinaison de l'axe passant par le centre de chacune d'elles, cette fois sans rail. Dans ce cas, un clip indépendant est encliqueté sur respectivement un axe se trouvant sur le bord de deux cassettes adjacentes et forme ainsi une charnière entre chaque paire de cassettes.

Ce type de cassettes pose le problème technique suivant.

Dans le cas d'un empilage à 45°, il n'est prévu aucun verrouillage mutuel entre paire de cassettes adjacentes. Lorsque l'on veut accéder à une cassette quelconque de l'empilage pour des raisons de maintenance par exemple, il faut relever les cassettes qui lui sont supérieures et les maintenir dans cette position relevée grâce par exemple à un moyen séparé de type bande élastique ou bande « Velcro ».

Il pourrait être envisagé d'utiliser des clips de même type que ceux décrit pour un empilage à 90°. Mais ces clips constituent des pièces de petites taille délicates à monter, nécessitant un outil de type pince ou tournevis pour leur démontage et dont il faut gérer le stockage en tant que pièce détachée.

Par ailleurs, le document de brevet EP 0 557 190 décrit une cassette de lovage et de raccordement de fibres optiques comportant un agencement de verrouillage par paire de cassettes empilées dans une position d'empilage à 90°, cet agencement étant intégré à la cassette.

L'invention résout ce problème en proposant une cassette de lovage et de raccordement de fibres optiques comme définie dans la revendication 1.

Ledit agencement de verrouillage est constitué d'au moins une bride présentant sur une des faces de la cassette au moins un tenon d'encliquetage et sur l'autre face de la cassette au moins trois orifices d'encliquetage alignés selon un axe de sorte à pouvoir recevoir ledit tenon d'une cassette adjacente dans une position d'empilage à 90° ainsi que dans une position d'empilage incliné, dont un orifice central est disposé au droit du dit tenon.

De cette façon, peut être assuré un verrouillage mutuel de chaque paire de cassettes, au moins en position d'empilage à 90°.

De préférence, la distance entre l'orifice central et les deux autres orifices est sensiblement égale à la tangente de l'angle correspondant à l'angle d'inclinaison multiplié par l'épaisseur de la cassette.

De cette façon, peut être assuré un verrouillage mutuel de chaque paire de cassettes, en position d'empilage incliné horizontal ou vertical.

Ledit agencement de verrouillage peut être moulé dans le corps de la cassette.

Selon une autre caractéristique de l'invention, la cassette comporte également un agencement d'articulation entre deux cassettes empilées à 90°, cet agencement étant intégré à la cassette.

Cette articulation est réalisée sans nécessité de pièce détachée et est de montage et de démontage aisés.

Selon un mode de réalisation préféré, ledit agencement d'articulation comprend deux pions d'encliquetage disposés sur un bord de la cassette et sur chaque face de cette dernière.

Une des faces peut comporter deux pions d'encliquetage mâle et l'autre face deux pions d'encliquetage femelle correspondants.

Selon une autre caractéristique de l'invention, la cassette comporte également un agencement de verrouillage en position ouverte, où deux cassettes initialement empilées à 90° sont déplacées au moyen dudit agencement d'articulation dans une position perpendiculaire l'une à l'autre, cet agencement de verrouillage étant intégré à la cassette.

Un telle positionnement ouvert permet une maintenance ou une intervention à l'intérieur de la cassette et peut être également réalsié sans nécessité de pièce détachée.

Selon un mode de réalisation préféré, ledit agencement de verrouillage en position ouverte comprend une bride disposée sur le même bord de la cassette, formant un cliquet et comportant sur une de ses faces une rainure correspondante à ce cliquet.

Ladite bride est de préférence disposée entre lesdits deux pions.

Ledit agencement d'articulation peut être moulé dans le corps de la cassette.

Ledit agencement de verrouillage en position ouverte peut être moulé dans le corps de la cassette.

Selon une autre caractéristique de l'invention, cette cassette est destinée à un empilage de cassettes au moyen d'un rail de support destiné à être fixé sur une paroi fixe, et est caractérisée en ce qu'elle comporte un agencement d'articulation avec ledit rail, cet agencement étant intégré à la cassette.

La cassette peut ainsi être également articulée sur un rail assurant son positionnement en empilage incliné.

Selon un mode de réalisation préféré, ledit rail de support comportant deux brides présentant des paires d'orifices destinés chacune à l'articulation d'une cassette, la cassette est caractérisée en ce que ledit agencement d'articulation avec le rail est un agencement d'encliquetage.

Cet agencement d'articulation avec le rail peut comprendre deux pions d'encliquetage disposés sur un bord de la cassette.

Ledit agencement d'articulation avec le rail peut être moulé dans le corps de la cassette.

De préférence, ladite position d'empilage incliné est à 45°.

Le rail de support destiné à former un ensemble d'empilage de cassettes par association avec au moins deux cassettes comme précisée ci-dessus comporte deux branches inclinées l'une par rapport à l'autre, dont l'une est pourvue de moyens destinés chacun à l'articulation d'une cassette, les deux branches étant pourvues de moyen de fixation à une paroi fixe.

Cette caractéristique permet de fixer le rail dans deux positions d'empilage incliné, horizontal et vertical, avec un même rail de support.

L'invention concerne enfin un ensemble d'empilage de cassettes optiques comportant un rail de support destiné à être fixé de façon inclinée sur une paroi fixe et au moins deux cassettes comme précisé ci-dessus, caractérisé en ce qu'au moins une cassette comporte un agencement de verrouillage en position ouverte, cet agencement de verrouillage coopérant avec un agencement coopérant réalisé sur le rail.

Selon un mode de réalisation préféré, ledit agencement de verrouillage en position ouverte est constitué d'un cliquet coopérant avec une patte agencée sur le rail.

Ledit agencement de verrouillage en position ouverte peut être moulé dans le corps de la cassette.

L'invention est décrite ci-après plus en détail à l'aide de figure ne représentant qu'un mode de réalisation préféré.
La figure 1 est une vue en perspective d'un ensemble d'empilage conforme à l'invention dans une première position à 45°.
La figure 2 est une vue en perspective d'un ensemble d'empilage conforme à l'invention dans une seconde position à 45°.
La figure 3A est une vue en perspective d'une cassette conforme à l'invention.
La figure 3B est une vue de détail de la figure 3A.
La figure 4 est une vue avant en perspective de plusieurs cassettes conforme à l'invention, dans une position d'empilage à 90°.
La figure 5 est une vue arrière de détail de la figure 4.
La figure 6 est une vue en perspective d'un ensemble d'empilage de cassettes dans une position à 45°, conforme à l'invention.
La figure 7 est une vue avant en perspective le même ensemble d'empilage de cassettes équipé d'un plus grand nombre de cassettes dans une position à 45°, conforme à l'invention
La figure 8 est une vue arrière de la figure 7.

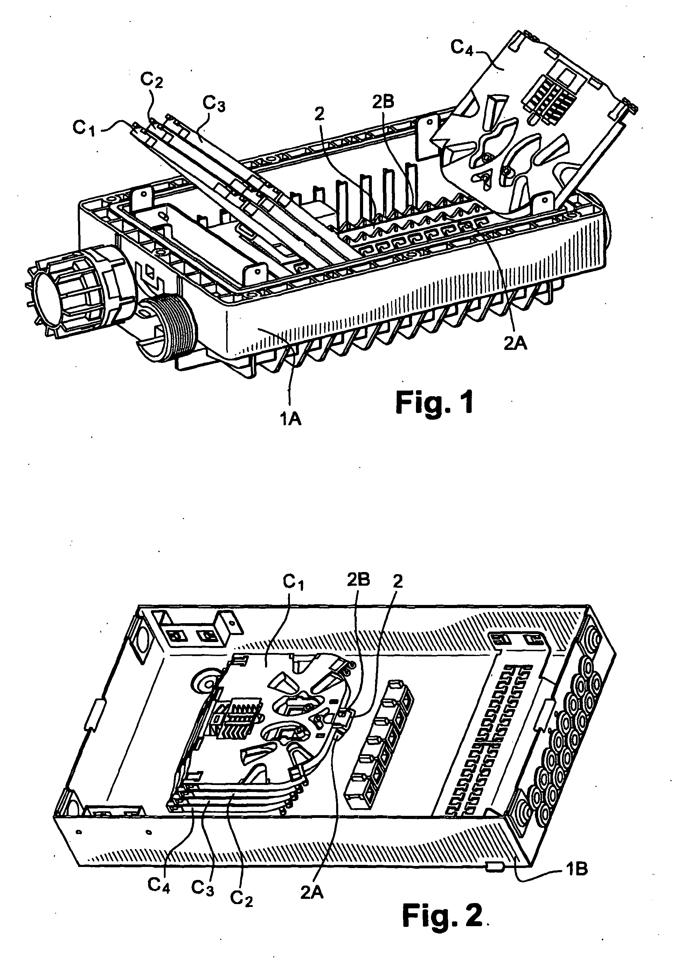

Les figures 1 et 2 illustrent deux positionnements d'un ensemble d'empilage de cassettes optiques en matière plastique, conforme à l'invention, dans un boîtier 1.

Cet ensemble d'empilage comporte un rail de support 2 qui est fixé sur une paroi fixe qui est ici le fond du boîtier. Ce rail support comporte deux branches dont une branche dite d'articulation présente deux brides 2A et 2B sur lesquelles sont articulées une pluralité de cassettes Ci. Les cassettes sont empilées à 45°.

Selon le positionnement représenté sur la figure 1, la branche d'articulation est fixée sur le fond du boîtier et les cassettes sont dans une position d'empilage dite horizontale.

Selon le positionnement représenté sur la figure 2, la branche d'articulation est fixée de façon inclinée à 45° par rapport au fond du boîtier et les cassettes sont dans une position d'empilage dite verticale.

Par des moyens qui seront décrits plus loin, l'invention permet de réaliser ces deux positionnements avec le même ensemble d'empilage standard, selon l'encombrement disponible et l'agencement du boîtier 1.

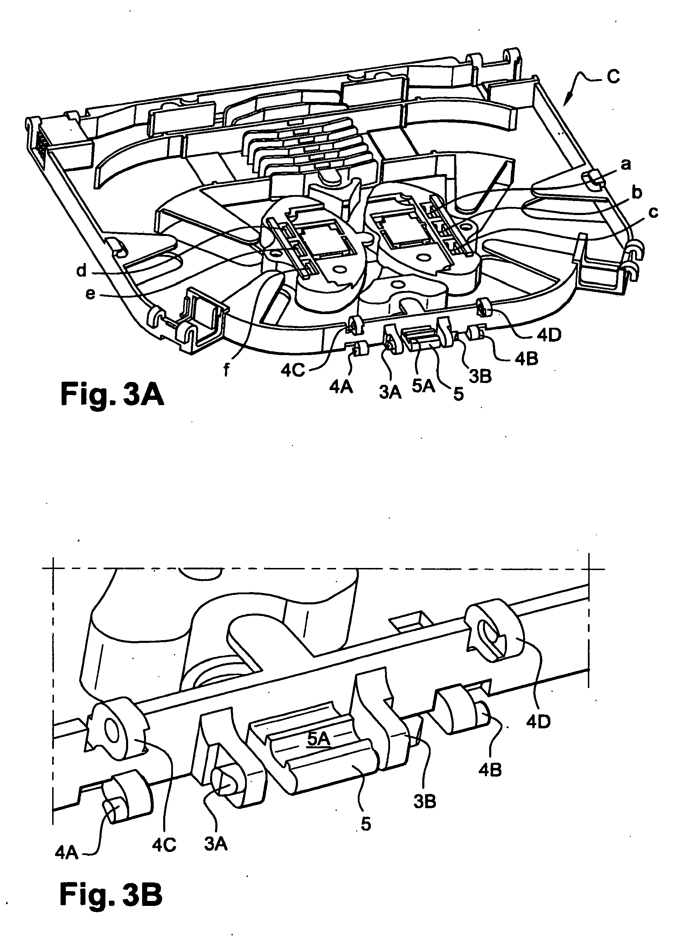

Les figures 3A et 3B représentent une cassette de lovage et de raccordement de fibres optiques conforme à l'invention.

Cette cassette C permet un empilage à 45° au moyen du rail de support 2 destiné à être fixé sur une paroi fixe, et comporte un agencement d'articulation avec le rail, cet agencement étant intégré à la cassette.

Comme il a été déjà vu, le rail de support 2 comporte deux brides présentant des paires d'orifices destinés chacune à l'articulation d'une cassette et l'agencement d'articulation de la cassette avec le rail est un agencement d'encliquetage.

Cet agencement d'articulation comprend deux pions d'encliquetage 3A et 3B disposés sur un bord de la cassette et moulés dans le corps de la cassette. Grâce à un biseau, chacun de ces pions peut être encliqueté à force dans chaque orifice de la paire d'orifices portée par le rail 2.

Selon une autre caractéristique de l'invention, la cassette comporte également un agencement d'articulation entre deux cassettes empilées à 90°, cet agencement étant intégré à la cassette.

Cet agencement d'articulation comprend deux pions d'encliquetage disposés sur un bord de la cassette et sur chaque face de cette dernière. Une des faces comporte deux pions d'encliquetage mâle 4A et 4B et l'autre face deux pions d'encliquetage femelle 4C et 4D correspondants.

La cassette comporte également un agencement de verrouillage en position ouverte, où deux cassettes initialement empilées à 90° sont déplacées au moyen des pions d'encliquetage 4 dans une position perpendiculaire l'une à l'autre.

Cet agencement de verrouillage en position ouverte comprend une bride 5 disposée sur le même bord de la cassette entre les deux pions d'encliquetage, formant un cliquet et comportant sur une de ses faces une rainure 5A correspondante à ce cliquet.

Cet agencement d'articulation ainsi que cet agencement de verrouillage sont moulés dans le corps de la cassette.

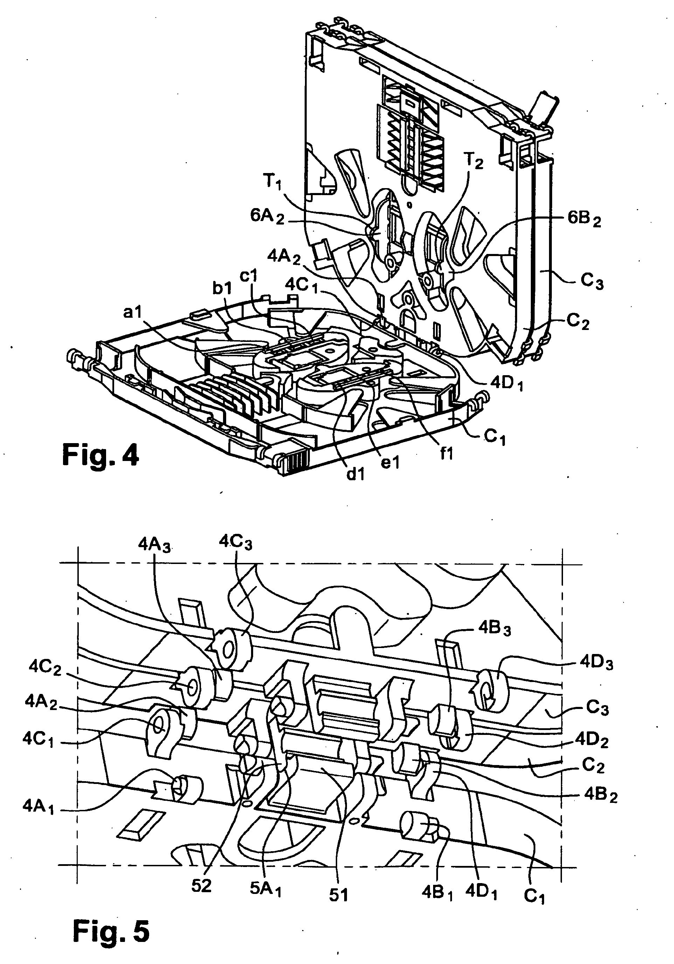

Les figures 4 et 5 illustrent un empilage à 90° de trois cassettes Ci, conforme à l'invention, avec deux cassettes C2 et C3 en position ouverte.

Les cassettes sont ici articulées l'une à l'autre grâce à l'encliquetage mutuel de leurs pions d'encliquetage 4.

Plus précisément, comme bien visible sur la figure 5, les deux pions d'encliquetage femelle 4C1 et 4D1 de la première cassette C1 sont encliquetés dans les deux pions d'encliquetage mâle 4A2 et 4B2 de la deuxième cassette C2 et les deux pions d'encliquetage femelle 4C2 et 4D2 de la deuxième cassette C2 sont encliquetés dans les deux pions d'encliquetage mâle 4A3 et 4B3 de la troisième cassette C3.

Le verrouillage en position ouverte de la deuxième cassette C2 est réalisé par coopération des brides de verrouillage des première et deuxième cassettes, comme également visible sur la figure 5.

La bride de verrouillage 51 de la première cassette C1 reçoit dans sa rainure 5A1 la bride 52 formant cliquet de la deuxième cassette C2, en position ouverte.

Le maintien en position de la troisième cassette C3 est alors assurée par un autre agencement de verrouillage qui constitue une caractéristique importante de la cassette conforme à l'invention.

La cassette conforme à l'invention comporte en effet un agencement de verrouillage par paire de cassettes empilées dans une position d'empilage à 90° ou à 45°, cet agencement étant intégré à la cassette. Cet agencement est visible sur les figures 3A et 4.

Cet agencement de verrouillage est constitué de deux brides 6A2 et 6B2 présentant chacune sur une des faces de la cassette un tenon d'encliquetage T1 et T2, visibles sur la deuxième cassette C2, et sur l'autre face de la cassette trois orifices d'encliquetage a à f, visibles sur la première cassette C1, alignés selon un axe de sorte à pouvoir recevoir ledit tenon d'une cassette adjacente dans une position d'empilage à 90° ainsi que dans une position d'empilage incliné, dont un orifice central b et e est disposé au droit du tenon T1 ou T2.

La distance entre l'orifice central et les deux autres orifices est sensiblement égale à la tangente de l'angle correspondant à l'angle d'inclinaison multiplié par l'épaisseur de la cassette.

Dans l'exemple décrit, l'angle d'inclinaison est de 45° et la distance entre l'orifice central b et e et les deux autres orifices est sensiblement égale à l'épaisseur de la cassette.

En d'autres termes, lorsque deux cassettes sont empilées à 90°, les deux tenons de l'une viennent s'encliqueter dans les orifices centraux de l'autre. Lorsque deux cassettes sont empilées à 45°, les tenons de l'une viennent dans une paire des autres orifices. Selon le sens de l'empilage à 45°, il s'agit de la paire c et f la plus proche de l'articulation ou de la paire a et d la plus éloignée de l'articulation.

Ces deux brides 6A et 6B sont moulées dans le corps de la cassette.

Bien qu'illustré dans le cas d'une cassette permettant un empilage à 90° et à 45°, cet agencement de verrouillage par paire de cassette peut être conçu pour des cassettes destinées à être empilées à 90° et sous un angle d'inclinaison autre que 45°.

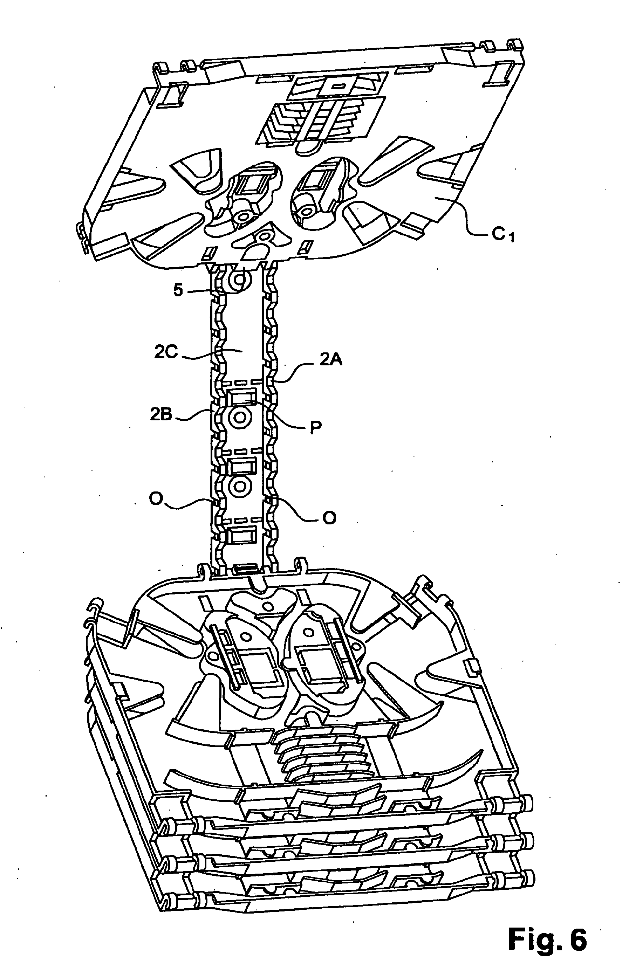

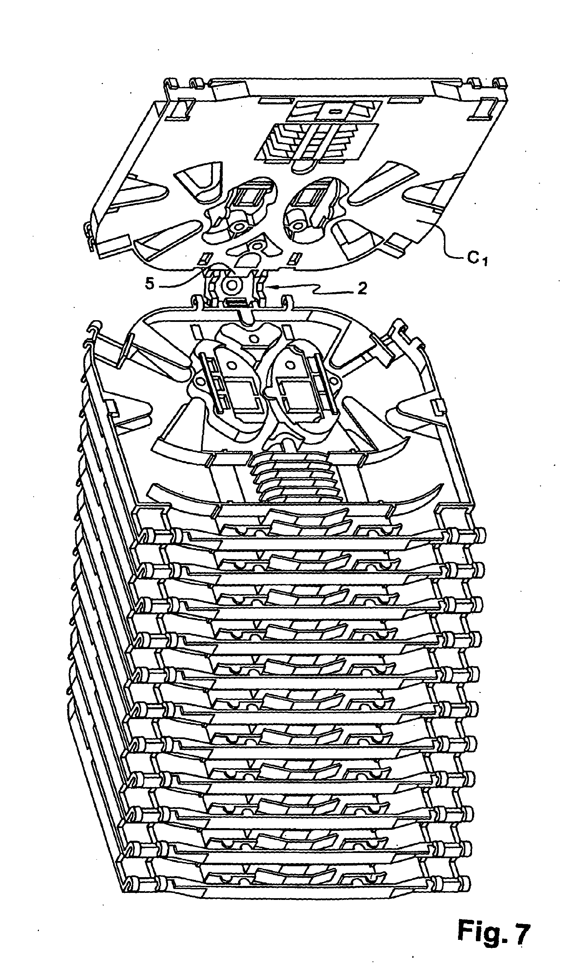

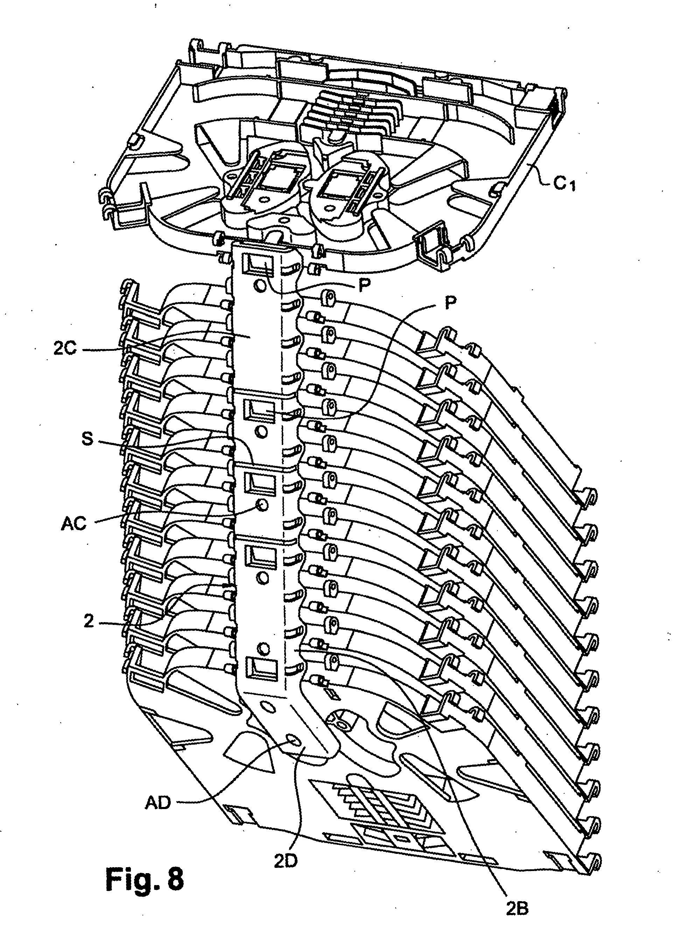

L'invention concerne également un rail de support 2 et un ensemble d'empilage constitué de ce rail et de cassettes conformes à l'invention, qui permet un empilage incliné, de préférence à 45°. Cet ensemble d'empilage est représenté sur les figures 6 à 8.

Ce rail 2 comporte deux branches 2C et 2D inclinées l'une par rapport à l'autre, dont l'une 2C est pourvue de deux brides 2A et 2B présentant des paires d'orifices O destinés chacune à l'articulation d'une cassette. Ces deux branches 2C et 2D sont pourvues de moyen de fixation à une paroi fixe, de préférence des alésages AC et AD permettant leur vissage.

Cette caractéristique permet de fixer ce rail selon la position représentée sur la figure 1, par fixation de la branche 2C portant les moyens d'articulation de cassettes sur le fond d'un boîtier 1, ou dans la position représentée sur la figure 2, par fixation de l'autre branche 2D sur le fond d'un boîtier 1.

Avantageusement, la branche 2C portant les moyens d'articulation de cassettes présente des lignes sécables S qui permettent aisément de régler sa longueur selon le nombre de cassettes.

A proximité de chacune de ces lignes sécables S, est agencée une patte P faisant saillie en direction des cassettes et qui est destinée au verrouillage en position ouverte de la première cassette C1 de l'empilage, telle que représenté sur les figures 6 à 8.

Pour ce verrouillage, la cassette conforme à l'invention comporte un agencement de verrouillage en position ouverte, coopérant avec cette patte P réalisé sur le rail 2. Cet agencement de verrouillage en position ouverte est constitué d'un cliquet moulé dans le corps de la cassette et coopérant avec la patte P agencée sur le rail. Ce cliquet est très avantageusement le cliquet formé par la bride de verrouillage en position ouverte 5 déjà décrite.

Grâce à l'invention, il est réalisé une cassette optique standard, qui peut être empilée en un empilage à 90° ou en un empilage incliné vertical ou horizontal, de préférence à 45°, associée à un rail support, et ceci, sans nécessité de pièces détachées supplémentaires, tous les agencements d'articulation et de verrouillage étant intégrés à la cassette et, de préférence, moulés avec le corps de celle-ci.

## Revendications

1. Cassette (C) de lovage et de raccordement de fibres optiques comportant un agencement de verrouillage par paire de cassettes empilées permettant de verrouiller deux cassettes adjacentes l'une contre l'autre selon un empilement définissant un axe d'empilement faisant un angle de 90° par rapport à la face cassettes, cet agencement de verrouillage assurant leur immobilisation relative et étant intégré à la cassette, ledit agencement de verrouillage assurant également un verrouillage des deux cassettes adjacentes l'une contre l'autre selon un axe d'empilement incliné déterminé, selon un angle différent de 90°, **caractérisée en ce que** ledit agencement de verrouillage est constitué d'au moins une bride (6A2, 6B2) positionnée sur une des faces principale de la cassette, ladite bride présentant au moins un tenon d'encliquetage (T) et sur l'autre face principale de la cassette au moins trois orifices d'encliquetage (a à f) alignés selon un axe, dont l'orifice central (b, e) est disposé au droit dudit tenon, de sorte que ledit orifice central (b, e) est adapté à recevoir le tenon d'une cassette adjacente lorsque les cassettes sont empilées selon ledit axe d'empilement faisant un angle de 90° et que les autres orifices (a, c, d, f) sont adaptés à recevoir le tenon d'une cassette adjacente lorsque les cassettes sont empilées selon un axe d'empilement incliné différent de 90°.

2. Cassette selon la revendication 1, **caractérisée en ce que** la distance entre l'orifice central (b, e) et les deux autres orifices (a, c, d, f) est sensiblement égale à la tangente de l'angle correspondant à l'angle d'inclinaison multiplié par l'épaisseur de la cassette.

3. Cassette selon l'une des revendications précédentes, **caractérisée en ce que** ledit agencement de verrouillage est moulé dans le corps de la cassette.

4. Cassette selon l'une des revendications précédentes, **caractérisée en ce qu'**elle comporte un agencement d'articulation entre deux cassettes empilées à 90°, cet agencement étant intégré à la cassette.

5. Cassette selon la revendication précédente, **caractérisée en ce que** ledit agencement d'articulation comprend deux pions d'encliquetage (4A à 4D) disposés sur un bord de la cassette et sur chaque face de cette dernière.

6. Cassette selon la revendication précédente, **caractérisé en ce qu'**une des faces comporte deux pions d'encliquetage mâle (4A, 48) et l'autre face deux pions d'encliquetage femelle (4C, 4D) correspondants.

7. Cassette selon l'une des revendications 4 à 6, **caractérisée en ce qu'**elle comporte également un agencement de verrouillage en position ouverte, où deux cassettes initialement empilées à 90° sont déplacées au moyen dudit agencement d'articulation dans une position perpendiculaire l'une à l'autre, cet agencement de verrouillage étant intégré à la cassette.

8. Cassette selon la revendication précédente, **caractérisée en ce que** ledit agencement de verrouillage en position ouverte comprend une bride (5) disposée sur le même bord de la cassette, formant un cliquet et comportant sur une de ses faces une rainure (5A) correspondante à ce cliquet.

9. Cassette selon l'une des revendications 5 à 8, **caractérisée en ce que** ladite bride (5) est disposée entre lesdits deux pions.

10. Cassette selon l'une des revendications 4 à 9, **caractérisée en ce que** ledit agencement d'articulation est moulé dans le corps de la cassette.

11. Cassette selon l'une des revendications 4 à 10, **caractérisée en ce que** ledit agencement de verrouillage en position ouverte est moulé dans le corps de la cassette.

12. Cassette selon l'une des revendications précédentes destinée à un empilage de cassettes au moyen d'un rail de support (2) destiné à être fixé sur une paroi fixe, **caractérisée en ce qu'**elle comporte un agencement d'articulation avec ledit rail, cet agencement étant intégré à la cassette.

13. Cassette selon la revendication précédente, ledit rail de support comportant deux brides (2A, 2B) présentant des paires d'orifices (O) destinés chacune à l'articulation d'une cassette, **caractérisée en ce que** ledit agencement d'articulation avec le rail est un agencement d'encliquetage.

14. Cassette selon la revendication précédente, **caractérisée en ce que** ledit agencement d'articulation avec le rail comprend deux pions d'encliquetage (3A, 3B) disposés sur un bord de la cassette.

15. Cassette selon l'une des revendications 12 à 14, **caractérisée en ce que** ledit agencement d'articulation avec le rail est moulé dans le corps de la cassette.

16. Cassette selon l'une des revendications précédentes, **caractérisée en ce que** ladite position d'empilage incliné est à 45°.

17. Ensemble d'empilage de cassettes optiques comportant un rail de support (2) destiné à être fixé de façon inclinée sur une paroi fixe et au moins deux cassettes selon l'une des revendications 1 à 15, **caractérisé en ce qu'**au moins une cassette comporte un agencement de verrouillage en position ouverte, cet agencement de verrouillage coopérant avec un agencement coopérant réalisé sur le rail.

18. Ensemble selon la revendication précédente, **caractérisé en ce que** ledit agencement de verrouillage en position ouverte est constitué d'un cliquet (5) coopérant avec une patte (P) agencée sur le rail.

19. Ensemble selon la revendication précédente, **caractérisé en ce que** ledit agencement de verrouillage en position ouverte est moulé dans le corps de la cassette.

## Claims

1. A cassette (C) for coiling and connecting optical fibers, comprising an arrangement for paired locking of stacked cassettes, allowing for locking of two cassettes adjacent to each other according to a stacking axis forming a 90° angle with respect to the side of the cassette, with the locking arrangement ensuring relative securing thereof, and being integrated into the cassette, said locking arrangement also ensuring locking of both cassettes adjacent to each other along a determined inclined stacking axis, at an angle other than 90°, **characterized in that** said locking arrangement consists of at least one flange (6A2, 6B2) positioned on one of the main sides of the cassette, said flange having at least one snap-in catch (T), and on the other main side of the cassette at least three snap-in orifices (a to f), aligned along an axis, the center orifice (b, e) of which is arranged in alignment with said catch, so that said center orifice (b, e) is adapted for receiving the catch of an adjacent cassette when the cassettes are stacked along said stacking axis forming a 90° angle, and the other orifices (a, c, d, f) are adapted for receiving the catch of an adjacent cassette when the cassettes are stacked along an inclined stacking axis other than 90°.

2. The cassette according to claim 1, **characterized in that** the distance between the center orifice (b, e) and the two other orifices (a, c, d, f) is substantially equal to the tangent of the angle corresponding to the angle of inclination multiplied by the thickness of the cassette.

3. The cassette according to any of the preceding claims, **characterized in that** said locking arrangement is formed in the cassette body.

4. The cassette according to any of the preceding claims, **characterized in that** it comprises a hinge arrangement between two cassettes stacked at 90°, with the arrangement being integrated into the cassette.

5. The cassette according to the preceding claim, **characterized in that** said hinge arrangement comprises two snap-in pins (4A to 4D) arranged on one edge of the cassette and on each side thereof.

6. The cassette according to the preceding claim, **characterized in that** one of the sides comprises two male snap-in pins (4A, 4B), and the other side comprises two corresponding female snap-in pins (4C, 4D).

7. The cassette according to any of claims 4 to 6, **characterized in that** it also comprises a locking arrangement in an open position, wherein two cassettes originally stacked at 90° are moved by means of said hinge arrangement into a position perpendicular to each other, the locking arrangement being integrated into the cassette.

8. The cassette according to the preceding claim, **characterized in that** said locking arrangement in the open position comprises a flange (5) arranged on the same edge of the cassette, forming a ratchet, and comprising on one of the sides thereof a groove (5A) corresponding to this ratchet.

9. The cassette according to any of claims 5 to 8, **characterized in that** said flange (5) is arranged between said two pins.

10. The cassette according to any of claims 4 to 9, **characterized in that** said hinge arrangement is formed inside the cassette body.

11. The cassette according to any of claims 4 to 10, **characterized in that** said locking arrangement in the open position is formed inside the cassette body.

12. The cassette according to any of the preceding claims for stacking cassettes by means of a supporting rail (2) designed to be fastened to a fixed wall, **characterized in that** it comprises a hinge arrangement with said rail, with the arrangement being integrated into the cassette.

13. The cassette according to the preceding claim, said supporting rail comprising two flanges (2A, 2B) having pairs of orifices (0) respectively designed for hinging one cassette, **characterized in that** said hinge arrangement with the rail is a snap-in arrangement.

14. The cassette according to the preceding claim, **characterized in that** said hinge arrangement with the rail comprises two snap-in pins (3A, 3B) arranged on one edge of the cassette.

15. The cassette according to any of claims 12 to 14, **characterized in that** said hinge arrangement with the rail is formed inside the cassette body.

16. The cassette according to any of the preceding claims, **characterized in that** said inclined stacking position is at 45°.

17. An arrangement for stacking optical cassettes, comprising a supporting rail (2) designed to be fastened to a fixed wall while being inclined, and at least two cassettes according to any of claims 1 to 15, **characterized in that** at least one cassette comprises a locking arrangement in an open position, the locking arrangement cooperating with a cooperating arrangement embodied on the rail.

18. The arrangement according to the preceding claim, **characterized in that** said locking arrangement in the open position consists of a ratchet (5) cooperating with a tab (P) arranged on the rail.

19. The arrangement according to the preceding claim, **characterized in that** said locking arrangement in the open position is formed inside the cassette body.

## Patentansprüche

1. Kassette (C) zum Zusammenrollen und Anschließen von Lichtleitfasern, umfassend eine Anordnung zum paarweisen Verriegeln gestapelter Kassetten, die es ermöglicht, zwei aneinander grenzende Kassetten gemäß einer Stapelachse zu verriegeln, die im Verhältnis zur Seite der Kassetten einen 90°-Winkel bildet, wobei diese Verriegelungsanordnung die relative Festlegung derselben sicherstellt und in die Kassette integriert ist, wobei die Verriegelungsanordnung auch eine Verriegelung der beiden aneinander grenzenden Kassetten entlang einer bestimmten geneigten Stapelachse in einem anderen Winkel als 90° sicherstellt, **dadurch gekennzeichnet, dass** die Verriegelungsanordnung aus mindestens einem Flansch (6A2, 6B2) besteht, der auf einer der Hauptseiten der Kassette positioniert ist, wobei der Flansch mindestens einen Rastzapfen (T) und auf der anderen Hauptseite der Kassette mindestens drei Rastöffnungen (a bis f) aufweist, die entlang einer Achse ausgerichtet sind, deren mittlere Öffnung (b, e) zu dem Zapfen fluchtrecht angeordnet ist, so dass die mittlere Öffnung (b, e) dazu geeignet ist, den Zapfen einer angrenzenden Kassette aufzunehmen, wenn die Kassetten entlang der Stapelachse gestapelt sind, die eine 90°-Winkel, und die anderen Öffnungen (a, c, d, f) dazu geeignet sind, den Zapfen einer angrenzenden Kassette aufzunehmen, wenn die Kassetten entlang einer anders als um 90° geneigten Stapelachse gestapelt sind.

2. Kassette nach Anspruch 1, **dadurch gekennzeichnet, dass** der Abstand zwischen der mittleren Öffnung (b, e) und den beiden anderen Öffnungen (a, c, d, f) im Wesentlichen gleich der Tangente des Winkels ist, der dem Neigungswinkel entspricht, der mit der Dicke der Kassette multipliziert wird.

3. Kassette nach einem der vorhergehenden Ansprüche, **dadurch gekennzeichnet, dass** die Verriegelungsanordnung in dem Körper der Kassette geformt ist.

4. Kassette nach einem der vorhergehenden Ansprüche, **dadurch gekennzeichnet, dass** sie eine Gelenkanordnung zwischen zwei um 90° gestapelte Kassetten umfasst, wobei diese Anordnung in die Kassette integriert ist.

5. Kassette nach dem vorhergehenden Anspruch, **dadurch gekennzeichnet, dass** die Gelenkanordnung zwei Raststifte (4A bis 4D) umfasst, die auf einem Rand der Kassette und auf jeder Seite derselben angeordnet sind.

6. Kassette nach dem vorhergehenden Anspruch, **dadurch gekennzeichnet, dass** eine der Seiten zwei Außenraststifte (4A, 4B) und die andere Seite zwei entsprechende Innenraststifte (4C, 4D) umfasst.

7. Kassette nach einem der Ansprüche 4 bis 6, **dadurch gekennzeichnet, dass** sie auch eine Verriegelungsanordnung in geöffneter Position umfasst, wobei zwei ursprünglich um 90° gestapelte Kassetten mittels der Gelenkanordnung in eine zueinander rechtwinklige Position verschoben werden, wobei diese Verriegelungsanordnung in die Kassette integriert ist.

8. Kassette nach dem vorhergehenden Anspruch, **dadurch gekennzeichnet, dass** die Verriegelungsanordnung in der geöffneten Position einen Flansch (5) umfasst, der auf dem gleichen Rand der Kassette angeordnet ist, eine Klinke bildet und auf einer seiner Seiten eine dieser Klinke entsprechende Rille (5A) umfasst.

9. Kassette nach einem der Ansprüche 5 bis 8, **dadurch gekennzeichnet, dass** der Flansch (5) zwischen den beiden Stiften angeordnet ist.

10. Kassette nach einem der Ansprüche 4 bis 9, **dadurch gekennzeichnet, dass** die Gelenkanordnung in dem Körper der Kassette geformt ist.

11. Kassette nach einem der Ansprüche 4 bis 10, **dadurch gekennzeichnet, dass** die Verriegelungsanordnung in der geöffneten Position in dem Körper der Kassette geformt ist.

12. Kassette nach einem dem vorhergehenden Ansprüche zum Stapeln von Kassetten mittels einer Trägerschiene (2), die dazu gedacht ist, an einer ortsfesten Wand befestigt zu werden, **dadurch gekennzeichnet, dass** sie eine Gelenkanordnung mit der Schiene umfasst, wobei diese Anordnung in die Kassette integriert ist.

13. Kassette nach dem vorhergehenden Anspruch, wobei die Trägerschiene zwei Flansche (2A, 2B) umfasst, die Öffnungspaare (0) aufweisen, die jeweils zur Anlenkung einer Kassette gedacht sind, **dadurch gekennzeichnet, dass** die Gelenkanordnung mit der Schiene eine Rastanordnung ist.

14. Kassette nach dem vorhergehenden Anspruch, **dadurch gekennzeichnet, dass** die Gelenkanordnung mit der Schiene zwei Raststifte (3A, 3B) umfasst, die auf einem Rand der Kassette angeordnet sind.

15. Kassette nach einem der Ansprüche 12 bis 14, **dadurch gekennzeichnet, dass** die Gelenkanordnung mit der Schiene in dem Körper der Kassette geformt ist.

16. Kassette nach einem dem vorhergehenden Ansprüche, **dadurch gekennzeichnet, dass** die geneigte Stapelposition bei 45° liegt.

17. Stapelanordnung optischer Kassetten, umfassend eine Trägerschiene (2), die dazu gedacht ist, geneigt an einer ortsfesten Wand befestigt zu werden, und mindestens zwei Kassetten nach einem der Ansprüche 1 bis 15, **dadurch gekennzeichnet, dass** mindestens eine Kassette eine Verriegelungsanordnung in geöffneter Position umfasst, wobei diese Verriegelungsanordnung mit einer auf der Schiene ausgebildeten zusammenwirkenden Anordnung zusammenwirkt.

18. Anordnung nach dem vorhergehenden Anspruch, **dadurch gekennzeichnet, dass** die Verriegelungsanordnung in geöffneter Position aus einer Klinke (5) besteht, die mit einer auf der Schiene eingerichteten Lasche (P) zusammenwirkt.

19. Anordnung nach dem vorhergehenden Anspruch, **dadurch gekennzeichnet, dass** die Verriegelungsanordnung in geöffneter Position in dem Körper der Kassette geformt ist.
